# EUROPÄISCHE PATENTSCHRIFT

(11) **EP 4 158 764 B1**
(45) Veröffentlichungstag und Bekanntmachung des Hinweises auf die Patenterteilung: **03.01.2024**
(21) Anmeldenummer: 21755472.4
(22) Anmeldetag: 05.08.2021
(51) Int. Cl.: H02K 9/197, H02K 5/20, H02K 9/20, H02K 9/22

(54) **GEHÄUSELOSE ELEKTRISCHE TRAKTIONSMASCHINE**
ELECTRIC TRACTION MACHINE WITH NO HOUSING
MOTEUR DE TRACTION ÉLECTRIQUE SANS BOITIER

(30) Priorität: 10.08.2020 EP 20190302
(43) Veröffentlichungstag der Anmeldung: 05.04.2023
(73) Patentinhaber: Traktionssysteme Austria GmbH, 2351 Wiener Neudorf (AT)
(72) Erfinder: WILD, Stefan, 2351 Wiener Neudorf (AT); SAMSTAG, Philipp, 2351 Wiener Neudorf (AT)
(74) Vertreter: SONN Patentanwälte GmbH & Co KG
(86) Internationale Anmeldenummer: PCT/EP2021/071833
(87) Internationale Veröffentlichungsnummer: WO 2022/033943

(56) Entgegenhaltungen:
- JP-A- 2017 085 765
- US-A- 3 801 843
- US-A1- 2016 099 617

## Beschreibung

Die Erfindung betrifft eine gehäuselose elektrische Traktionsmaschine, mit einem aus einem Statorblechpaket aufgebauten Stator und einer Rotorwelle mit einem darauf befestigten, aus einem Rotorblechpaket aufgebauten Rotor, wobei das Statorblechpaket zwischen zwei außenliegenden Pressplatten und zumindest einem jeweils ein Lager für die Rotorwelle aufweisenden Lagerschild angeordnet ist, und zwischen den Pressplatten Zugleisten angeordnet sind, wobei entlang eines Teils des Umfangs des Statorblechpakets zwischen den Pressplatten zumindest zwei Kühlkörper mit jeweils zumindest einem Kühlkanal zur Führung eines Kühlfluids gegenüberliegend an der Oberfläche des Statorblechpakets angeordnet sind, sodass die gehäuselose elektrische Traktionsmaschine eine gegenüber der Breite verringerte Höhe aufweist, wobei jeder Kühlkörper über Befestigungsschrauben oder andere Befestigungselemente mit zumindest einer Zugleiste und bzw. oder den Pressplatten und bzw. oder dem Statorblechpaket verbunden ist.

Die vorliegende Erfindung bezieht sich auf gehäuselose elektrische Traktionsmaschinen, also elektrische Antriebsmotoren, vorzugsweise für schienengebundene Fahrzeuge, wie Straßenbahnen oder Eisenbahnen.

Insbesondere bei Niederflurschienenfahrzeugen, welche ein bequemes Ein- und Aussteigen für die Passagiere ermöglichen, steht aufgrund des niedrigen Niveaus des Fußbodens nur sehr wenig Platz für das Fahrgestell, das Getriebe und die Antriebsmotoren zur Verfügung. Bei Schienenfahrzeugen können einzelne Räder oder Radsätze mit jeweils einem Motor angetrieben werden. Dementsprechend umfasst ein Fahrwerk mit vier Rädern üblicherweise zwei oder vier Antriebsmotoren. Da Schienenfahrzeuge meist für zwei Fahrtrichtungen ausgelegt werden, müssen die elektrischen Maschinen für beide Drehrichtungen ausgelegt werden.

Beispielsweise beschreibt die EP 0 548 044 B1 ein Schienenfahrzeug, dessen Drehgestell insbesondere für Niederflurschienenfahrzeuge mit geringer Fußbodenhöhe und somit beschränktem Platz für Fahrwerk, Getriebe und Antriebsmotoren ausgebildet ist. Dabei erfolgt der Antrieb vorzugsweise über Radnabenmotoren, welche direkt unter den Radkästen untergebracht werden.

Bekannte Niederflurschienenfahrzeuge weisen aufgrund der größeren Bauweise der Antriebsmotoren, Getriebe und Drehgestelle Bereiche mit höherer Fußbodenhöhe bzw. Bereiche, welche für die Fahrgäste nicht zur Verfügung stehen, auf, was natürlich Nachteile für die Personenbeförderung, insbesondere im urbanen Gebiet, mit sich bringt.

Neben der Konstruktion von elektrischen Maschinen, welche möglichst klein, aber dennoch möglichst leistungsstark ausgebildet sein sollen, stellt deren Kühlung eine große Herausforderung dar, da die Führung des Kühlfluids und die Abfuhr der Verlustwärme ebenfalls im begrenzten Raumangebot des Niederflurschienenfahrzeugs untergebracht werden muss. Dementsprechend werden Teile der Kühlsysteme auch häufig am Dach des Schienenfahrzeugs platziert. Beispielsweise beschreibt die CN 1 937 365 A eine wassergekühlte, elektrische Traktionsmaschine für den Antrieb eines Schienenfahrzeugs, welche über ein Gehäuse verfügt und somit eine größere Bauform aufweist, als gehäuselose elektrische Maschinen.

Eine gehäuselose elektrische Traktionsmaschine ist beispielsweise aus der US 2016/0099617 A1 bekannt. US 2016/0099617 A1 offenbart die Merkmale des Oberbegriffs von Anspruch 1. Die Kühlung erfolgt über Kühlrippen, welche entsprechend in den Statorblechpaketen integriert sind. Die Kühlrippen erhöhen die Dimensionen der elektrischen Maschine. Bei einer derartigen reinen Konvektionskühlung der elektrischen Maschine sind die erzielbaren Leistungsdichten begrenzt.

Die Aufgabe der vorliegenden Erfindung besteht daher in der Schaffung einer oben genannten gehäuselosen elektrischen Traktionsmaschine, welche möglichst platzsparend, aber dennoch möglichst leistungsstark ausgebildet ist, sodass insbesondere eine Anwendung als Antriebsmaschine für Niederflurschienenfahrzeuge vorteilhaft ist. Nachteile bekannter elektrischer Maschinen sollen vermieden oder zumindest reduziert werden.

Gelöst wird die erfindungsgemäße Aufgabe dadurch, dass die Kühlkanäle zur Führung einer Kühlflüssigkeit vorgesehen sind, und dass die Pressplatten im Wesentlichen rechteckig und das Statorblechpaket im Wesentlichen quadratisch ausgebildet sind. Dadurch, dass nur entlang eines Teils des Umfangs des Statorblechpakets zumindest zwei Kühlkörper mit jeweils zumindest einem Kühlkanal gegenüberliegend angeordnet werden, resultiert eine Bauform der gehäuselosen elektrischen Traktionsmaschine, welche in einer Dimension, bei üblicher Anordnung der Höhe, geringere Abmessungen aufweist als in der anderen Dimension, üblicherweise der Breite. Somit kann eine gehäuselose elektrische Traktionsmaschine realisiert werden, die besonders platzsparend ist und sich somit für den Antrieb der Schienenräder einer Niederflurstraßenbahn besonders eignet. Die Kühlkörper schließen direkt an die Oberfläche des Statorblechpakets an, wodurch eine optimale Verbindung der Kühlkörper mit dem Statorblechpaket und somit eine optimale Abführung der Wärme aus dem Statorblechpaket resultiert. Daher soll eine möglichst gute Wärmeleitfähigkeit zur optimalen Abführung der Verlustwärme des Statorblechpakets über die Kühlflüssigkeit gegeben sein. Jeder Kühlkörper weist zumindest einen Kühlkanal zur Führung einer Kühlflüssigkeit auf, sodass die beim Betrieb der elektrischen Maschine erzeugte Verlustwärme rasch abgeführt werden kann und eine Überhitzung der elektrischen Maschine wirkungsvoll verhindert werden kann. Die Kühlkanäle der Kühlkörper können in Serien- oder Parallelschaltung mit der Kühlflüssigkeit versorgt werden. Allfällige Verbindungsleitungen zwischen den Kühlkörpern für die Kühlflüssigkeit können bereits in der Konstruktion der elektrischen Maschine integriert sein. Eine Serienschaltung der Kühlkörper kann auch über mehrere elektrische Motoren hinweg erfolgen. Dadurch dass die Pressplatten im Wesentlichen rechteckig und das Statorblechpaket im Wesentlichen quadratisch ausgebildet sind, ist die elektrische Maschine besonders platzsparend und eignet sich speziell zur Anwendung als Antriebsmotor bei Niederflurschienenfahrzeugen. Aufgrund der geringen Baugröße der elektrischen Maschine und der niedrigen bewegten Massen des Rotors können besonders hohe Drehzahlen, beispielsweise bis über 12.000 min⁻¹, erreicht werden. Die elektrische Maschine ist vorzugsweise als Asynchronmaschine oder permanentmagneterregte Synchronmaschine ausgeführt. Im Besonderen kann die elektrische Maschine bei Niederflurschienenfahrzeugen so angeordnet werden, dass die Rotorwelle unterhalb der Drehachse des anzutreibenden Schienenrads angeordnet ist. Dies ist aufgrund der geringen Baugröße der elektrischen Maschine möglich und führt zu verbesserten räumlichen Eigenschaften und somit einer niedrigeren erreichbaren Fußbodenhöhe im Schienenfahrzeug. Durch die Verbindung jedes Kühlkörpers mit zumindest einer Zugleiste wird die Festigkeit der gehäuselosen elektrischen Maschine, insbesondere bei hohen Drehzahlen, gewährleistet. Die Verbindung zwischen Kühlkörper und Zugleisten erfolgt über entsprechende Befestigungsschrauben oder auch andere Befestigungselemente erfolgen, welche die notwendigen mechanischen Anforderungen erfüllen.

Vorteilhafterweise sind entlang des Umfangs des Statorblechpakets vier Zugleisten und zwei Kühlkörper gegenüberliegend über jeweils einen Umfangswinkel von 60° bis 135°, vorzugsweise von im Wesentlichen 90°, zwischen jeweils zwei Zugleisten angeordnet. Bei der Anordnung zweier Kühlkörper über einen derartigen Umfangswinkel resultiert eine besonders niedrige Bauform der gehäuselosen elektrischen Traktionsmaschine. Die symmetrische Anordnung zweier Kühlkörper verbessert die Kühlwirkung.

Der zumindest eine Kühlkanal in jedem Kühlkörper weist zumindest einen Einlass und zumindest einen Auslass für die Kühlflüssigkeit auf, und verläuft vorzugsweise mäanderförmig. Durch diese einfache und kostengünstig realisierbare Maßnahme resultiert eine verbesserte Wärmeabfuhr und somit eine optimale Kühlung der elektrischen Maschine, wodurch trotz der geringen Baugröße hohe Leistungsdichten erzielbar sind.

Vorteilhafterweise ist jeder Kühlkörper mit dem Statorblechpaket zumindest stellenweise formschlüssig verbunden, um eine optimale thermische Anbindung des Kühlkörpers zum Statorblechpaket zu erzielen. Bei dieser Ausführungsvariante wird der Kühlkörper so gestaltet und verarbeitet, dass eine Art Formschluss zwischen der Oberfläche des Statorblechpakets und dem Kühlkörper zustande kommt. Zur Befestigung des Kühlkörpers am Statorblechpaket können auch Befestigungsschrauben verwendet werden.

Wenn zwischen jedem Kühlkörper und dem Statorblechpaket eine Wärmeleitfolie oder Wärmeleitpaste angeordnet ist, können Unebenheiten und Toleranzen zwischen dem Statorblechpaket und dem Kühlkörper ausgeglichen und ein besserer thermischer Kontakt zwischen der Kühlflüssigkeit im Kühlkörper und dem Stator der elektrischen Maschine erzielt werden. Die Wärmeleitfolie oder Wärmeleitpaste besteht aus einem Material mit entsprechend guter Wärmeleitung und einer möglichst guten Formanpassung bzw. sogenannter "Gap-Filler"-Eigenschaft. Für die Wärmeleitfolien eignen sich beispielsweise elastomere Schaumstoffe oder Silikonfolien mit Glasfaserverstärkung. Für die Wärmeleitpasten eignen sich beispielsweise Zweikomponenten-Silikonpasten besonders.

Alternativ zu einer formschlüssigen Verbindung kann jeder Kühlkörper auch mit dem Statorblechpaket stoffschlüssig verbunden sein. Als Verbindungsmethoden eignen sich insbesondere Schweißverfahren, Lötverfahren oder auch Klebeverfahren.

Die Kühlflüssigkeit ist vorzugsweise durch Kühlwasser, dass allenfalls mit geeigneten Zusätzen versehen ist, gebildet. Über entsprechende Leitungen wird die Kühlflüssigkeit zu jedem Kühlkörper jeder elektrischen Maschine geleitet und die in der elektrischen Maschine erzeugte Wärme über Wärmetauscher, die beispielsweise am Dach eines Niederflurschienenfahrzeugs angeordnet sein können, abgeführt. Die einzelnen Kühlkörper verschiedener elektrischer Maschinen können in Serie zusammengeschaltet werden, um möglichst kurze Verbindungsleitungen für die Kühlflüssigkeit zwischen den elektrischen Maschinen zu erzielen.

An der Antriebsseite der Rotorwelle der gehäuselosen elektrischen Traktionsmaschine kann eine Kupplung zur Verbindung mit einem Getriebe angeordnet sein. Dabei eignet sich beispielsweise eine Bogenzahnkupplung besonders, um etwaige Relativbewegungen zwischen der elektrischen Maschine und dem Getriebe auszugleichen. Andere Ausführungsformen sehen elektrische Maschinen mit nur einer Lagerstelle der Rotorwelle in der elektrischen Maschine selbst und einer zweiten Lagerung mithilfe einer Membrankupplung im Getriebe vor. Weiters kann die Rotorwelle der elektrischen Maschine zusammen mit der Ritzelwelle eines Getriebes in einem Bauteil vereint werden.

Das zumindest eine Lager für die Lagerung der Rotorwelle in dem zumindest einen Lagerschild kann durch ein Schrägkugellager gebildet sein. Derartige an sich bekannte Kugellager eignen sich für die Lagerung der Rotorwelle der elektrischen Maschine besonders, da diese Lager besonders gute Laufeigenschaften im oberen Drehzahlbereich aufweisen.

Wenn im Rotorblechpaket zumindest ein Wärmerohr mit freiem Ende oder in Verbindung mit einem Kühlkörper angeordnet ist, kann der Rotor der elektrischen Maschine zusätzlich gekühlt werden. Derartige sog. "Heatpipes" sind metallene Gefäße länglicher Form, welche ein hermetisch gekapseltes Volumen enthalten, in dem ein Arbeitsmedium, z.B. Wasser oder Ammoniak, enthalten ist, welches das Volumen zu einem kleinen Teil in flüssigen, zum größeren Teil in gasförmigem Zustand ausfüllt. Unter Nutzung der Verdampfungswärme des Mediums können große Wärmemengen auf kleinere Querschnittsflächen transportiert werden. Auf diese Weise kann der Rotor über das zumindest eine Wärmerohr gekühlt werden, indem die Wärme zum freien Ende des Wärmerohrs transportiert wird und dort allenfalls von einem Kühlkörper abgeführt wird.

Die Höhe der gehäuselosen elektrischen Traktionsmaschine liegt vorzugsweise in einem Bereich zwischen 60 mm und 300 mm, die Breite zwischen 60 mm und 300 mm und die Länge zwischen 110 mm und 1000 mm. Derartige Dimensionen eignen sich insbesondere für die Anwendung der elektrischen Maschine als Antriebsmotor bei Niederflurschienenfahrzeugen.

Die Rotorwelle weist vorzugsweise einen Durchmesser von 20 mm bis 100 mm und eine Länge zwischen 100 mm und 980 mm auf. Diese Dimensionen eignen sich insbesondere für einen Antriebsmotor bei Schienenfahrzeugen, insbesondere Niederflurfahrzeugen.

Die vorliegende Erfindung wird anhand der beigefügten Zeichnungen näher erläutert. Darin zeigen:
- Fig. 1: eine perspektivische Prinzipdarstellung einer erfindungsgemäßen gehäuselosen elektrischen Traktionsmaschine;
- Fig. 2: eine weitere perspektivische Ansicht einer erfindungsgemäßen gehäuselosen elektrischen Traktionsmaschine;
- Fig. 3: eine teilweise geschnittene Seitenansicht der gehäuselosen elektrischen Traktionsmaschine gemäß Fig. 2;
- Fig. 4: ein Schnitt durch die gehäuselose elektrische Traktionsmaschine gemäß Fig. 3 entlang der Schnittlinie IV- IV;
- Fig. 5: ein Schnitt durch die gehäuselose elektrische Traktionsmaschine gemäß Fig. 4 entlang der Schnittlinie V - V; und
- Fig. 6: eine perspektivische Prinzipdarstellung einer mit einem Getriebe verbundenen gehäuselosen elektrischen Traktionsmaschine.

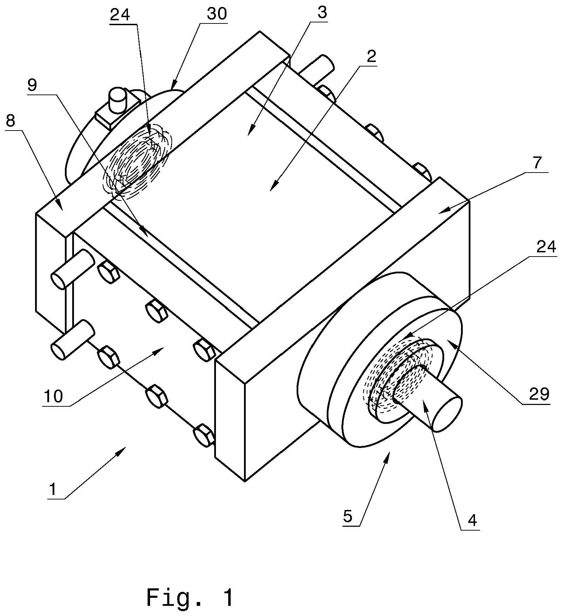

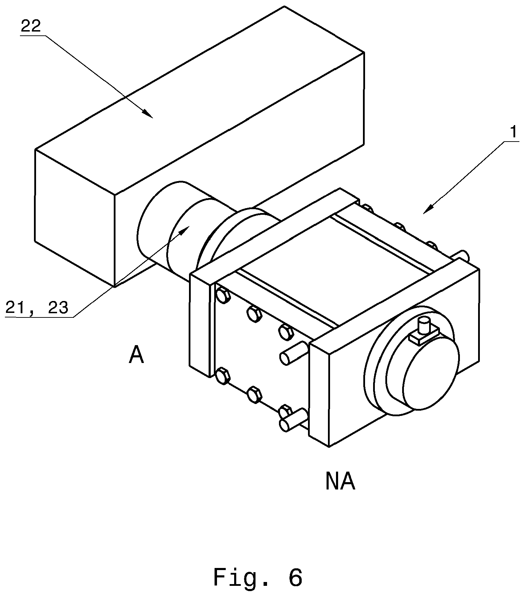

Fig. 1 zeigt eine perspektivische Prinzipdarstellung einer erfindungsgemäßen gehäuselosen elektrischen Traktionsmaschine 1. Die als Innenläufer ausgeführte elektrische Traktionsmaschine 1 besteht aus einem Stator 2, der aus einem entsprechenden Statorblechpaket 3 aufgebaut ist, und einem beweglichen Teil, dem Rotor 5, der aus einer Rotorwelle 4 und einem darauf befestigten Rotorblechpaket 6 aufgebaut ist. Das Statorblechpaket 3 des Stators 2 ist zwischen zwei außenliegenden Pressplatten 7 und 8 angeordnet. Außerhalb der Pressplatten 7 und 8 befindet sich jeweils ein Lagerschild 29 und 30, welches entsprechende Lager 24 (strichliert eingezeichnet) für die Lagerung der Rotorwelle 4 aufweisen. Die elektrische Traktionsmaschine 1 kann auch nur ein Lager 24 in einem Lagerschild 29 oder 30 beinhalten und das zweite Lager für die Rotorwelle 4 kann auch in einer Kupplung 21 oder einem Getriebe 22 (siehe Fig. 6) integriert sein.

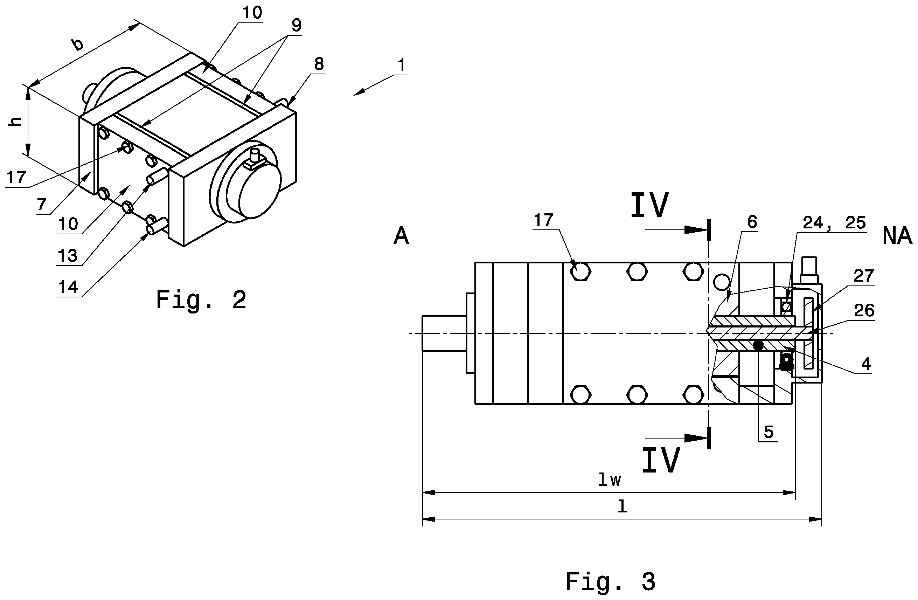

Erfindungsgemäß sind entlang eines Teils des Umfangs des Statorblechpakets 3 zwischen den Pressplatten 7 und 8 an der Oberfläche des Statorblechpakets 3 zumindest zwei Kühlkörper 10 mit jeweils zumindest einem Kühlkanal 11 zur Führung einer Kühlflüssigkeit K (nicht dargestellt) gegenüberliegend angeordnet, sodass die elektrische Traktionsmaschine 1 eine gegenüber der Breite b verringerte Höhe h aufweist (siehe Fig. 2). Zwischen den Pressplatten 7, 8 sind Zugleisten 9 angeordnet. Die Kühlkörper 10 können mit den Zugleisten 9 verbunden sein. In jedem Kühlkörper wird in dem zumindest einen Kühlkanal 11 eine Kühlflüssigkeit K geführt, um die in der elektrischen Traktionsmaschine 1 erzeugte Wärme abführen zu können.

Fig. 2 zeigt eine weitere perspektivische Prinzipdarstellung einer erfindungsgemäßen gehäuselosen elektrischen Traktionsmaschine 1. Erfindungsgemäß resultiert eine elektrische Traktionsmaschine 1, welche eine gegenüber der Breite b verringerte Höhe h aufweist. Über entsprechende Einlässe 13 und Auslässe 14 im Kühlkörper 10 kann die Kühlflüssigkeit K in den Kühlkörper 10 und aus dem Kühlkörper 10 heraus gefördert werden. Beispielsweise befindet sich je Kühlkörper 10 ein Einlass 13 für die Kühlflüssigkeit K und ein Auslass 14 für die Kühlflüssigkeit K. Über Befestigungsschrauben 17 kann der Kühlkörper 10 mit den Zugleisten 9 verbunden werden. Alternativ oder zusätzlich dazu kann eine Befestigung der Kühlkörper auch mit entsprechenden Befestigungsschrauben oder Befestigungselementen an den Pressplatten 7, 8 oder am Statorblechpaket 3 (nicht dargestellt) erfolgen.

In Fig. 3 ist eine teilweise geschnittene Darstellung der gehäuselosen elektrischen Traktionsmaschine 1 gemäß Fig. 2 gezeigt. Hier ist der aus Rotorwelle 4 und Rotorblechpaket 6 bestehende Rotor 5 der elektrischen Traktionsmaschine 1 dargestellt. In der Rotorwelle 4 kann ein Wärmerohr 26 angeordnet sein, dessen freies Ende mit einem Kühlkörper 27 verbunden sein kann. Die Länge l_{w} der Rotorwelle 4 kann zwischen 100 mm und 980 mm betragen. Die Länge l der gesamten elektrischen Maschine beispielsweise zwischen 110 mm und 1000 mm. An der Nichtantriebsseite NA der elektrischen Traktionsmaschine 1 kann ein Drehgeber (nicht dargestellt) angeordnet sein, der zur Regelung der Umdrehungszahl verwendet werden kann. Eine Zahnscheibe, welche die Signale für einen solchen Drehgeber erzeugt, könnte als Kühlkörper 27 für das Wärmerohr 26 verwendet werden.

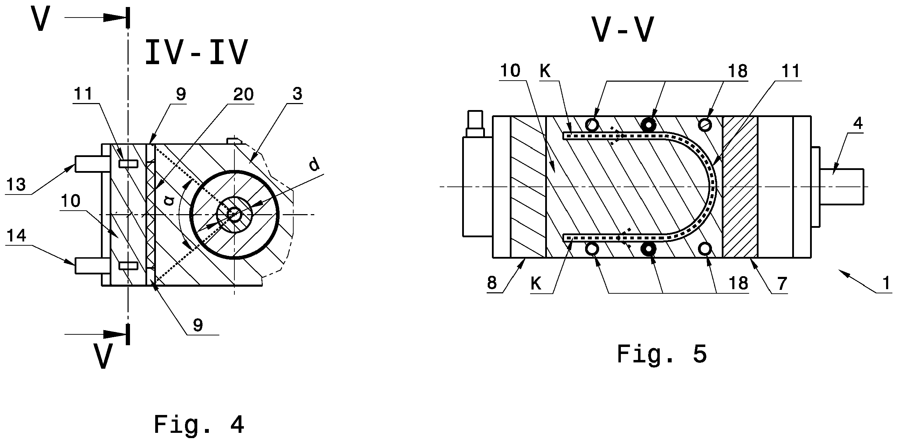

Fig. 4 zeigt das Schnittbild durch die gehäuselose elektrische Traktionsmaschine 1 gemäß Fig. 3 entlang der Schnittlinie IV - IV. Aus diesem Schnittbild ist ein Kühlkörper 10 mit dem Einlass 13 und dem Auslass 14 für die Führung der Kühlflüssigkeit K in zumindest einem Kühlkanal 11 ersichtlich. Der Kühlkörper 10 kann über eine Wärmeleitfolie oder Wärmeleitpaste 20 mit dem Statorblechpaket 3 verbunden sein, wodurch die im Statorblechpaket 3 auftretende Wärme an die Kühlflüssigkeit K im Kühlkörper 10 abgegeben und entsprechend abgeführt werden kann. Über die Zugleisten 9 zwischen den Pressplatten 7, 8 wird der elektrischen Traktionsmaschine 1 die notwendige Festigkeit verliehen. Im dargestellten Ausführungsbeispiel erstreckt sich der Kühlkörper 10 über einen Umfangswinkel α von etwas weniger als 90°. Der Durchmesser d der Rotorwelle 4 beträgt beispielsweise 20 mm bis 100 mm.

Fig. 5 zeigt das Schnittbild durch die gehäuselose elektrische Traktionsmaschine 1 gemäß Fig. 4 entlang der Schnittlinie V - V.

Die Kühlflüssigkeit K gelangt über den Einlass 13 in den Kühlkanal 11 des Kühlkörpers 10 und wird über einen Auslass 14 wieder abgeführt. Über die Bohrungen 18 erfolgt mit Hilfe von entsprechenden Befestigungsschrauben 17 (siehe Fig. 2 und 3) eine Befestigung des Kühlkörpers 10 an den Zugleisten 9 (nicht dargestellt).

Schließlich ist in Fig. 6 eine perspektivische Prinzipdarstellung einer mit einem Getriebe 22 verbundenen gehäuselosen elektrischen Traktionsmaschine 1 wiedergegeben. An der Antriebsseite A der Rotorwelle 4 kann eine Kupplung 21 zur Verbindung mit einem Getriebe 22 vorgesehen sein. Die Kupplung 21 kann beispielsweise durch eine Bogenzahnkupplung 23 realisiert werden.

## Patentansprüche

1. Gehäuselose elektrische Traktionsmaschine (1), mit einem aus einem Statorblechpaket (3) aufgebauten Stator (2) und einer Rotorwelle (4) mit einem darauf befestigten, aus einem Rotorblechpaket (6) aufgebauten Rotor (5), wobei das Statorblechpaket (3) zwischen zwei außenliegenden Pressplatten (7, 8) und zumindest einem jeweils ein Lager (24) für die Rotorwelle (4) aufweisenden Lagerschild (29, 30) angeordnet ist, und zwischen den Pressplatten (7, 8) Zugleisten (9) angeordnet sind, wobei entlang eines Teils des Umfangs des Statorblechpakets (3) zwischen den Pressplatten (7, 8) zumindest zwei Kühlkörper (10) mit jeweils zumindest einem Kühlkanal (11) zur Führung eines Kühlfluids gegenüberliegend an der Oberfläche des Statorblechpakets (3) angeordnet sind, sodass die gehäuselose elektrische Traktionsmaschine (1) eine gegenüber der Breite (b) verringerte Höhe (h) aufweist, wobei jeder Kühlkörper (10) über Befestigungsschrauben (17) oder andere Befestigungselemente mit zumindest einer Zugleiste (9) und bzw. oder den Pressplatten (7, 8) und bzw. oder dem Statorblechpaket (3) verbunden ist, **dadurch gekennzeichnet, dass** die Kühlkanäle (11) zur Führung einer Kühlflüssigkeit vorgesehen sind, und dass die Pressplatten (7, 8) im Wesentlichen rechteckig und das Statorblechpaket (3) im Wesentlichen quadratisch ausgebildet sind.

2. Gehäuselose elektrische Traktionsmaschine (1) nach Anspruch 1, **dadurch gekennzeichnet, dass** entlang des Umfangs des Statorbleckpakets (3) vier Zugleisten (9) und zwei Kühlkörper (10) gegenüberliegend über jeweils einen Umfangswinkel (α) von 60° bis 135°, vorzugsweise von im Wesentlichen 90°, zwischen jeweils zwei Zugleisten (9) angeordnet sind.

3. Gehäuselose elektrische Traktionsmaschine (1) nach Anspruch 1 oder 2, **dadurch gekennzeichnet, dass** der zumindest eine Kühlkanal (11) in jedem Kühlkörper (10) zumindest einen Einlass (13) und zumindest einen Auslass (14) für die Kühlflüssigkeit (K) aufweist, und dass der zumindest eine Kühlkanal (11) vorzugsweise mäanderförmig verläuft.

4. Gehäuselose elektrische Traktionsmaschine (1) nach einem der Ansprüche 1 bis 3, **dadurch gekennzeichnet, dass** jeder Kühlkörper (10) mit dem Statorblechpaket (3) zumindest stellenweise formschlüssig verbunden ist.

5. Gehäuselose elektrische Traktionsmaschine (1) nach einem der Ansprüche 1 bis 4, **dadurch gekennzeichnet, dass** zwischen jedem Kühlkörper (10) und dem Statorblechpaket (3) eine Wärmeleitfolie oder Wärmeleitpaste (20) angeordnet ist.

6. Gehäuselose elektrische Traktionsmaschine (1) nach einem der Ansprüche 1 bis 3, **dadurch gekennzeichnet, dass** jeder Kühlkörper (10) mit dem Statorblechpaket (3) zumindest stellenweise stoffschlüssig verbunden ist.

7. Gehäuselose elektrische Traktionsmaschine (1) nach einem der Ansprüche 1 bis 6, **dadurch gekennzeichnet, dass** die Kühlflüssigkeit (K) durch Kühlwasser gebildet ist.

8. Gehäuselose elektrische Traktionsmaschine (1) nach einem der Ansprüche 1 bis 7, **dadurch gekennzeichnet, dass** an der Antriebsseite (A) der Rotorwelle (4) eine Kupplung (21) zur Verbindung mit einem Getriebe (22), vorzugsweise eine Bogenzahnkupplung (23), angeordnet ist.

9. Gehäuselose elektrische Traktionsmaschine (1) nach einem der Ansprüche 1 bis 8, **dadurch gekennzeichnet, dass** das zumindest eine Lager (24) in dem zumindest einen Lagerschild (29, 30) durch ein Schrägkugellager (25) gebildet ist.

10. Gehäuselose elektrische Traktionsmaschine (1) nach einem der Ansprüche 1 bis 9, **dadurch gekennzeichnet, dass** im Rotorblechpaket (6) zumindest ein Wärmerohr (26) mit freiem Ende oder in Verbindung mit einem Kühlkörper (27) zur Kühlung des Rotors (3) angeordnet ist.

## Claims

1. Housing-free electric traction machine (1), comprising a stator (2) constructed from a stator laminated core (3), and a rotor shaft (4) having a rotor (5) which is constructed from a rotor laminated core (6) and secured on said shaft, wherein the stator laminated core (3) is arranged between two outer press plates (7, 8) and at least one bearing shield (29, 30) having a bearing (24) for the rotor shaft (4) in each case, and tension strips (9) are arranged between the press plates (7, 8), wherein, along part of the circumference of the stator laminated core (3) between the press plates (7, 8), at least two cooling bodies (10) each having at least one cooling channel (11) for guiding a cooling fluid are arranged opposite one another on the surface of the stator laminated core (3) such that the housing-free electric traction machine (1) has a smaller height (h) relative to its width (b), wherein each cooling body (10) is connected to at least one tension strip (9) and/or the press plates (7, 8) and/or the stator laminated core (3) by securing screws (17) or other securing members, **characterized in that** the cooling channels (11) are provided for guiding a cooling liquid, and **in that** the press plates (7, 8) are substantially rectangular and the stator laminated core (3) is substantially square.

2. Housing-free electric traction machine (1) according to claim 1,
**characterized in that** four tension strips (9) and two cooling bodies (10) are arranged so as to be opposite one another along the circumference of the stator laminated core (3), in each case over a circumferential angle (α) of 60° to 135°, preferably of substantially 90°, between two tension strips (9) in each case.

3. Housing-free electric traction machine (1) according to claim 1 or 2,
**characterized in that** the at least one cooling channel (11) in each cooling body (10) has at least one inlet (13) and at least one outlet (14) for the cooling liquid (K), and **in that** the at least one cooling channel (11) preferably extends in a meandering manner.

4. Housing-free electric traction machine (1) according to any of claims 1 to 3,
**characterized in that** each cooling body (10) is form-fittingly connected to the stator laminated core (3) at least in places.

5. Housing-free electric traction machine (1) according to any of claims 1 to 4,
**characterized in that** a heat conducting film or heat conducting paste (20) is arranged between each cooling body (10) and the stator laminated core (3).

6. Housing-free electric traction machine (1) according to any of claims 1 to 3,
**characterized in that** each cooling body (10) is integrally bonded to the stator laminated core (3) at least in places.

7. Housing-free electric traction machine (1) according to any of claims 1 to 6,
**characterized in that** the cooling liquid (K) is formed by cooling water.

8. Housing-free electric traction machine (1) according to any of claims 1 to 7,
**characterized in that** a coupling (21) for connecting to a transmission (22), preferably a curved toothed coupling (23), is arranged on the drive side (A) of the rotor shaft (4).

9. Housing-free electric traction machine (1) according to any of claims 1 to 8,
**characterized in that** the at least one bearing (24) in the at least one bearing shield (29, 30) is formed by an angular contact ball bearing (25).

10. Housing-free electric traction machine (1) according to any of claims 1 to 9,
**characterized in that** at least one heat pipe (26) having a free end or connected to a cooling body (27) for cooling the rotor (3) is arranged in the rotor laminated core (6).

## Revendications

1. Machine de traction électrique sans boîtier (1), avec un stator (2) construit à partir d'un noyau feuilleté de stator (3) et un arbre de rotor (4) avec un rotor (5) fixé à celui-ci, construit à partir d'un noyau feuilleté de rotor (6), où le noyau feuilleté de stator (3) est disposé entre deux plaques de pression (7, 8) situées à l'extérieur et au moins un flasque (29, 30) comportant dans chaque cas un roulement (24) pour l'arbre de rotor (4), et entre les plaques de pression (7, 8) sont disposées des barres de traction (9), où au moins deux dissipateurs thermiques (10), chacun avec au moins un canal de refroidissement (11) pour guider un fluide de refroidissement, sont disposés l'un en face de l'autre sur la surface du noyau feuilleté de stator (3), le long d'une partie de la circonférence du noyau feuilleté de stator (3) entre les plaques de pression (7, 8), de sorte que la machine de traction électrique sans boîtier (1) présente une hauteur (h) réduite par rapport à la largeur (b), où chaque dissipateur thermique (10) est relié par le biais de vis de fixation (17) ou d'autres éléments de fixation avec au moins une barre de traction (9) et/ou les plaques de pression (7, 8) et/ou le noyau feuilleté de stator (3), **caractérisée en ce que** les canaux de refroidissement (11) sont prévus pour guider un liquide de refroidissement, et **en ce que** les plaques de pression (7, 8) sont agencées de manière sensiblement rectangulaire et le noyau feuilleté de stator (3) est agencé de manière sensiblement carrée.

2. Machine de traction électrique sans boîtier (1) selon la revendication 1, **caractérisée en ce que** le long de la circonférence du noyau feuilleté de stator (3) quatre barres de traction (9) et deux dissipateurs thermiques (10) sont disposés en se faisant face sur un angle de circonférence (α) de 60° à 135° dans chaque cas, de préférence de sensiblement 90°, à chaque fois entre deux barres de traction (9).

3. Machine de traction électrique sans boîtier (1) selon la revendication 1 ou 2, **caractérisée en ce que** le au moins un canal de refroidissement (11) comporte dans chaque dissipateur thermique (10) au moins une entrée (13) et au moins une sortie (14) pour le liquide de refroidissement (K), et **en ce que** le au moins un canal de refroidissement (11) s'étend de préférence en forme de méandre.

4. Machine de traction électrique sans boîtier (1) selon l'une des revendications 1 à 3, **caractérisée en ce que** chaque dissipateur thermique (10) est relié au noyau feuilleté de stator (3) par assemblage de forme au moins par endroits.

5. Machine de traction électrique sans boîtier (1) selon l'une des revendications 1 à 4, **caractérisée en ce qu'**une feuille conductrice de la chaleur ou une pâte conductrice de la chaleur (20) est disposée entre chaque dissipateur thermique (10) et le noyau feuilleté de stator (3).

6. Machine de traction électrique sans boîtier (1) selon l'une des revendications 1 à 3, **caractérisée en ce que** chaque dissipateur thermique (10) est relié au noyau feuilleté de stator (3) par assemblage de forme au moins par endroits.

7. Machine de traction électrique sans boîtier (1) selon l'une des revendications 1 à 6, **caractérisée en ce que** le liquide de refroidissement (K) est formé par de l'eau de refroidissement.

8. Machine de traction électrique sans boîtier (1) selon l'une des revendications 1 à 7, **caractérisée en ce que** du côté entraînement (A) de l'arbre de rotor (4) est disposé un accouplement (21) pour la liaison à un engrenage (22), de préférence accouplement à denture sphérique (23).

9. Machine de traction électrique sans boîtier (1) selon l'une des revendications 1 à 8, **caractérisée en ce que** le au moins un roulement (24) dans le au moins un flasque (29, 30) est constitué par un roulement à billes à portée oblique (25).

10. Machine de traction électrique sans boîtier (1) selon l'une des revendications 1 à 9, **caractérisée en ce que** dans le noyau feuilleté de rotor (6) est disposé au moins un caloduc (26) à extrémité libre ou en liaison avec un dissipateur thermique (27) pour refroidir le rotor (3).
